# EUROPEAN PATENT APPLICATION

(11) **EP 2 275 067 A1**
(43) Date of publication of application: **19.01.2011**
(21) Application number: 09165809.6
(22) Date of filing: 17.07.2009
(51) Int. Cl.: A61G 5/06, B62B 5/02

(54) **Stair lift with wheels supported by rotating handles**

(71) Applicant: Antano Group S.R.L., 06039 Trevi (PG) (IT)
(72) Inventor: Mancinelli, Vincenzo, 06030, Valtopina (PG) (IT)
(74) Representative: Baldi, Claudio

(57) **Abstract**

The present invention relates to a stair lift with wheels supported by rotating handles, actuated by the same shaft (2) with horizontal axis driven in rotation by a motor; for every start-up of the motor, the shaft (2) drives the said pair of handles (3) in 360° complete rotation, after which the handles (3) always return to their original idle position, which coincides with the position in which the stair lift (M) rests on the ground by means of said wheels (6).

## Description

### Stair lift with wheels supported by rotating handles.

The present patent application relates to a stair lift provided with two motion wheels applied at the end of rotating handles that impose on said wheels 360° rotations around a horizontal axis in off-centre position with respect to their hub, thus allowing the stair lift to climb steps up or down without using any other lifting or landing devices.

The so-called "stair lifts" are machines that are normally used to transport disabled people seating on wheelchairs when it is necessary to overcome architectural barriers, such as staircases in buildings.

In such a situation, while remaining seated in his wheelchair, the disabled person is transferred on board the stair lift, whose frame is provided with suitable fixing means and temporary locking means for an ordinary wheelchair for disabled people.

Moreover, some of the models of stair lifts available on the market incorporate the seat for the disabled person.

The stair lift can be handled by one operator, who is able to transfer the disabled person from one floor to another floor in a building, without special efforts or manoeuvres, thus overcoming the obstacle represented by the stairs.

Similar stair lifts are especially useful in those situations in which the disabled person is affected by severe paralysis with serious consequences on his/her motorial functions. In such a case, it is very complicated to transfer the disabled person from the wheelchair to the motor chairs, if any, designed to move up and down along a guide track that develops for the entire height of the stair well.

Said stair lifts are normally provided with a rear drive bar and a front pair of lateral wheels that allow them to slide along a flat surface, similar to a load-bearing barrow.

After getting the stair lift close to the back of the wheelchair, the operator must first tie the wheelchair to the frame of the stair lift and then overturn the wheelchair backwards by grabbing the drive bar and pivoting on the pair of wheels.

In order to climb the steps up and down, the machines that are currently available on the market are provided with a lifting device, which comprises a pair of articulated support-legs designed to pass from a raised idle position, in which the machine is completely retracted inside the frame of the machine, to a lowered work position, in which the machine is completely extended outside the frame, projecting under the wheels.

When the wheelchair is loaded and transported on flat surfaces, said support-legs are held in rear position in order not to interfere with the free sliding of the machine on the wheels.

When a step must be climbed, the operator must actuate the motor designed to actuate the support-legs, which are lowered until they rest on the ground, and lift the wheels from the ground.

It must be noted that when a staircase must be climbed, the said machine is dragged backwards until the wheels touch the rise of the step to be climbed. Now the motor is actuated to actuate the support-legs that extend downwards to lift the stair lift, until the lateral wheels are positioned above the tread of the step and then return to retracted position.

If the stair lift must climb the steps down, as soon as the wheels are on the edge of the step to be climbed down, the support-legs are extended downwards until they rest on the tread of the step below in order to control the gradual landing of the stair lift on said tread during the following retraction of the support-legs.

The actuation mechanisms of said support-legs are rather complicated, delicate and expensive.

The purpose of the present invention is to devise a new model of stair lift for transportation of disabled people in seated position and more generally for transportation of loads of any type on steps, which is provided with an innovative original lifting device that is simple, inexpensive to make and extremely reliable.

Another purpose of the present invention is to devise a new model of stair lift, wherein the two wheels used to slide on the ground are also used as the only means for the gradual lifting or landing of the stair lift from one step to another step of a staircase.

These and other purposes have been achieved by the stair lift of the invention, whose characteristics are claimed in the first claim and in the following dependent claims.

The stair lift of the invention is normally provided with a lateral pair of wheels used to move on a flat surface, which are supported by rotating handles that impose on said wheels 360° rotations around a horizontal axis in off-centre position with respect to their hub, in such a way that said wheels can reach and land on planes with different height, thus allowing the stair lift for climbing the steps of a staircase up or down, without using any other lifting or landing device.

For purposes of clarity the description of the stair lift of the invention continues with reference to the enclosed drawings, which are intended for purposes of illustration only and not in a limiting sense, wherein:
- fig. 1 is an exploded view of one of the two lateral lifting mechanisms of the stair lift of the invention according to a direction perpendicular to the axis of rotation of the wheels;
- fig. 2 is a cross-sectional view of one of the two lifting mechanisms of the stair lift of the invention with a plane passing through the axis of rotation of the wheels in configuration with free wheels;
- fig. 3 is the same as fig. 2 except for that the wheels are in locked configuration;
- figs. 4 to 9 are side views of the various configurations of the stair lift and relevant wheels while climbing up a step;
- fig. 10 is a side view of the configuration of the stair lift of the invention while climbing down a step;
- fig. 11 is a diagrammatic front view of the stair lift of the invention with the two wheels in locked position.

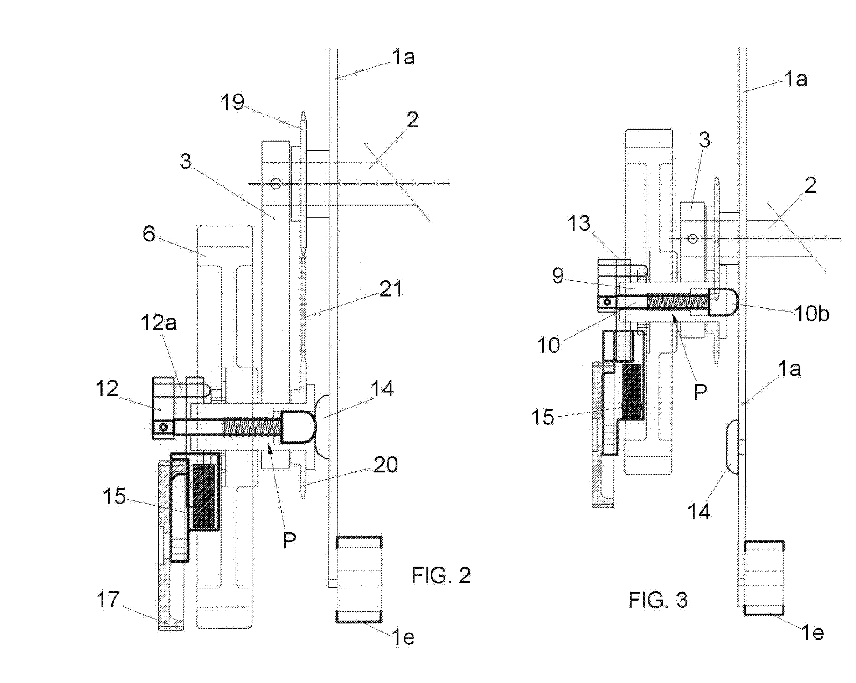

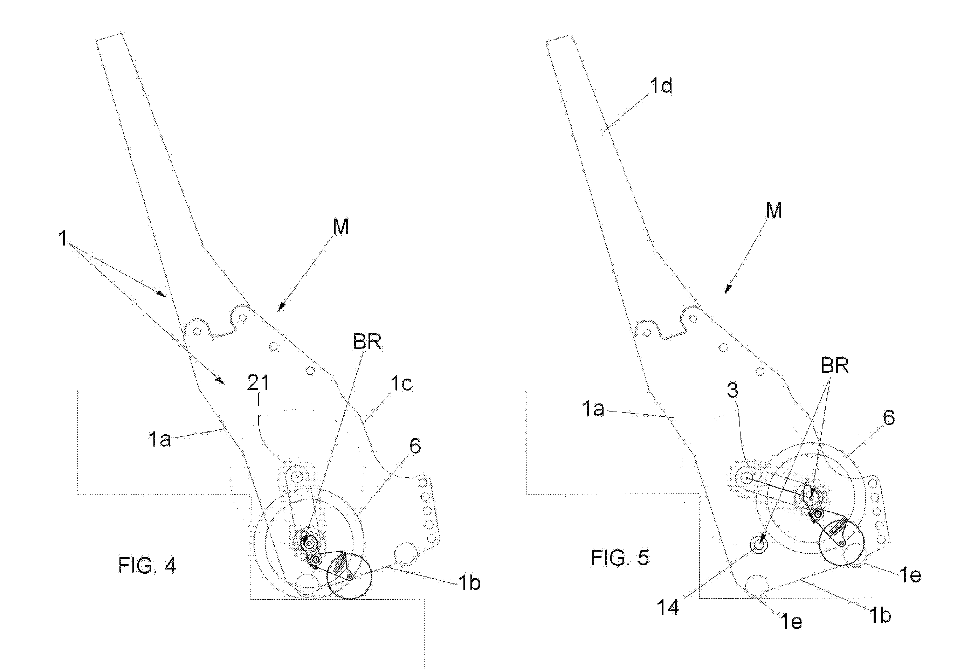

It must be noted that the configurations illustrated in figures 2 and 3 refer to the operating positions respectively shown in figures 4 and 5.

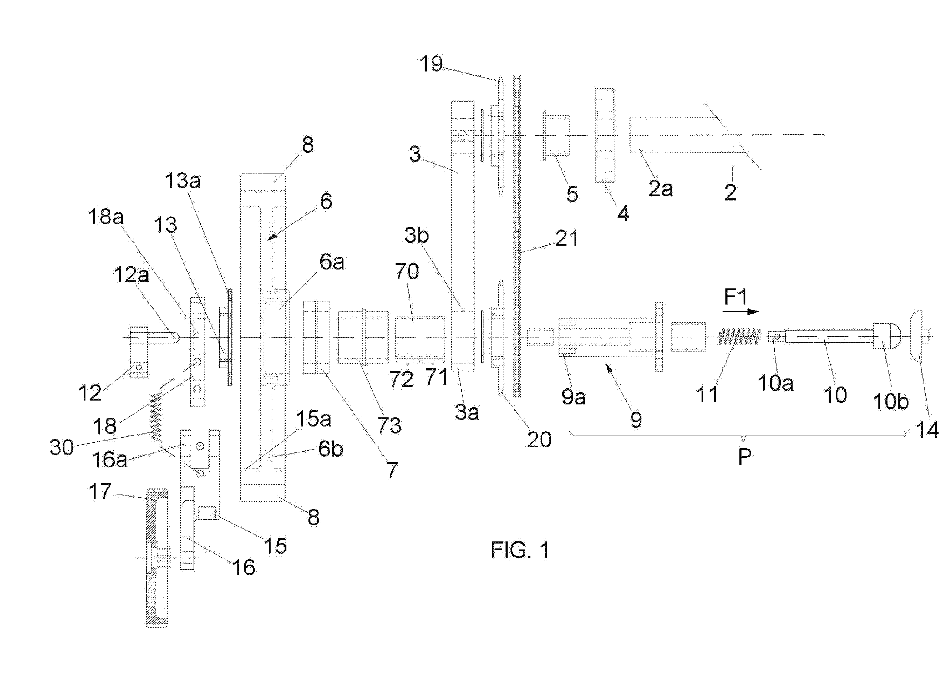

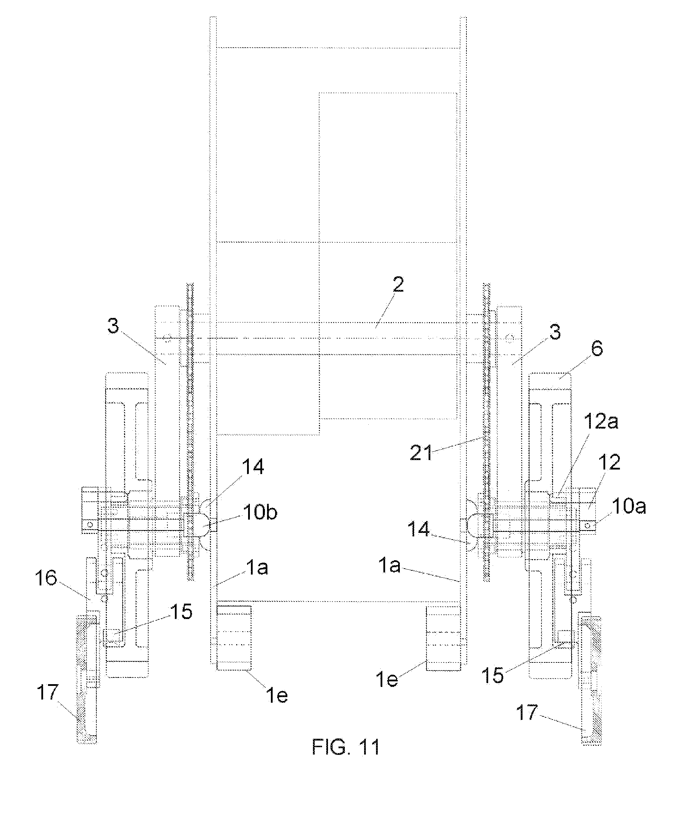

With reference to figs. 4 and 11, the stair lift (M) of the invention comprises a frame (1) composed of a lateral pair of plates (1 a) with vertically elongated shape, defining an intermediate space that houses a preferably electrical motor, with drive shaft (2) projecting from both plates (1 a) of the frame (1) for a short section (2a), as shown in fig. 1.

Two identical handles (3) are specularly fixed on said end sections (2a) of the drive shaft (2), one on the right and one on the left side, with the interposition of a spacer (4) and a first bush (5).

Each handle (3) supports an outward-facing pin (P) at the free end (3a), on which one of the two identical wheels (6) that actuate the stair lift both in forward and backward motion, during the ascending and descending travel, is pivoted.

More precisely, said drive shaft (2) can rotate in both directions, so that the wheels (6) are driven into 360° rotations with the same direction as the rotation of the shaft (2).

The radius of said wheels is such that during the 360° rotation of the handles (3) each wheel (6) protrudes from the base (1 b) of the frame (1), so that the stair lift rests on the ground with the base (1 b) when the handles (3) are raised, whereas it rests on the ground with the pair of wheels (6) when the handles (3) are lowered.

Said stair lift (M) is provided on the front (1 c) of the frame (1) with fixing means for wheelchairs, and with a handgrip (1 d) on top.

The operator must get the stair lift (M) close to the back of the wheelchair in order to lock it with the fixing means, then lift it from the ground by simply pulling the handgrip (1 d) towards him to overturn the stair lift (M) and the wheelchair fixed to it slightly backwards.

In this position the operator can move the stair lift (M) until it is positioned near the steps to the climbed up or down.

More precisely, to climb up the steps (as shown in figs. 4 to 9), said stair lift is moved back until the wheels (6) are near the rise of the first step to be climbed up (as shown in fig. 4), and then the motor is actuated in the rotation direction that corresponds to backward rotation (in anticlockwise direction in this case) of the handles (3).

As soon as rotation of the handles (3) starts, the wheels (6) are detached from the ground and the stair lift (M) rests on the ground on the base (1 b) where feet (1 e) of anti-slip material are applied, as shown in fig. 5.

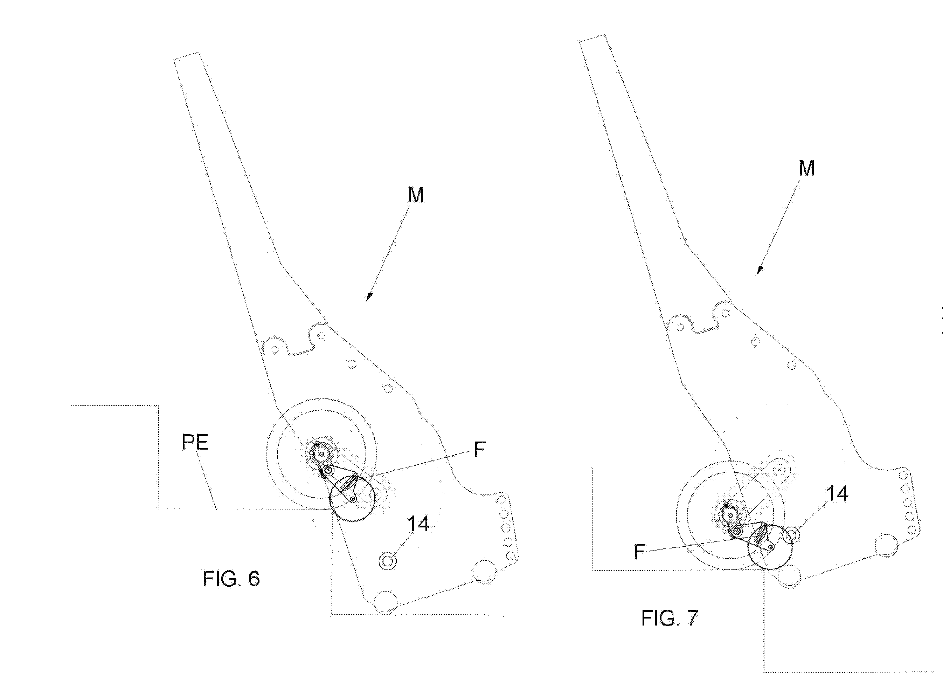

The position of the stair lift (M) remains unchanged as long as rotation of the handles (3) continues and changes as soon as the wheels (6) interfere with the tread (PE) of the higher step, as shown in fig. 6.

Now the stair lift (M) starts raising, levering on the wheels (6) that must adhere firmly with respect to the tread of the step, as shown in fig. 7.

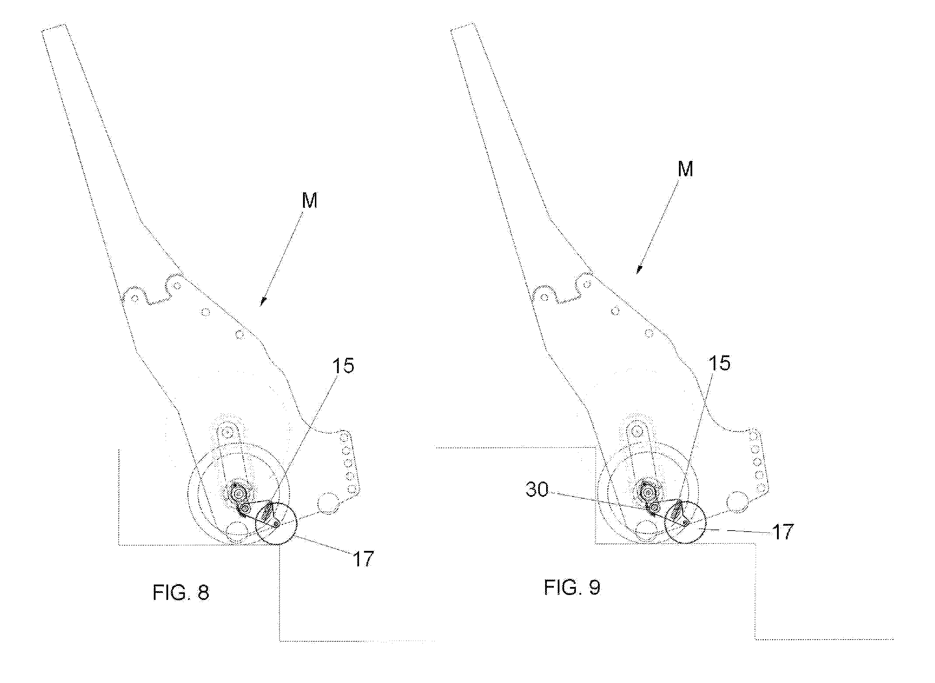

Once the handles (3) have completed 360° rotation and the stair lift (M) has completed the ascending travel of the step, as shown in fig. 8, the operator can move the stair lift (M) back towards the next step and climb it with a new rotation cycle of the handles (3), as shown in fig. 9, which is identical to fig. 4.

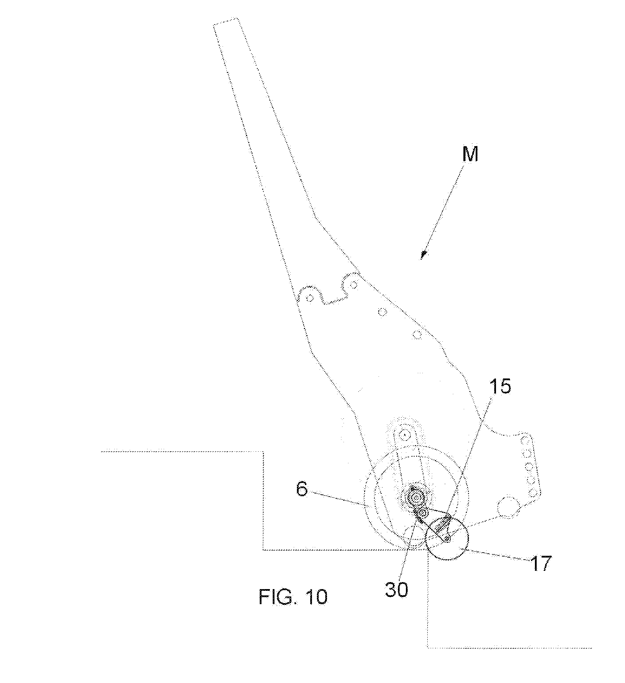

On the contrary, in order to climb the steps down, the descending travel can be performed by actuating the motor in reverse direction, after positioning the stair lift near the edge of the step to climb down, as shown in fig. 10.

As mentioned above, the stair lift (M) is lifted as soon as the pair of wheels (6) rests on the tread (PE) of the step.

This is the most delicate phase since the entire weight of the wheelchair and of the stair lift (M) is discharged on the handles (3) and wheels (6), which are in relative motion with respect to the frame (1) of the stair lift (M), which tends to unbalance forwards under the weight of the wheelchair.

For safety reasons, both wheels (6) must be locked in this phase and for such a reason the stair lift (M) of the invention is provided with a wheel-lock device (BR) designed to lock the wheels (6) from the beginning to the end of the 360° rotation of the handles (3).

With reference to fig. 1, each of the two handles (3) is provided at the free end (3a) with a through hole (3b) with axis parallel to the axis of rotation of the handle (3), in which a bush (70) is inserted for a section (71) of its length, whereas the remaining section (72) is inserted into a coupling (73) that is in turn inserted, with free rotation, in the bearing (7) contained in the hub (6a) of the wheel (6) composed of a rim (6b) with external rubber tread (8).

Inside the bush (70) the cylindrical sleeve (9) of a lock pin (10) is inserted, which is in turn inserted from inside towards outside through the sleeve (9), which also contains a spring (11) adapted to constantly push the pin (10) towards the lateral plate (1 a) of the frame (1) of the stair lift (M) in the direction of the arrow (F1).

The outward-facing end of the pin (10) protrudes from the sleeve (9) for a short section (10a), in which a flat plate (12) is fixed in external position to the wheel (6), being provided on the internal side with a lock peg (12a) with axis parallel to the axis of rotation of the wheel (6).

Each wheel (6) is provided on the hub (6a) with a regularly spaced annular series of holes, with suitable diameter to house the peg (12a).

To avoid weakening the structure of the wheel (6) with said annular series of holes, according to a preferred embodiment of the stair lift (M) of the invention, the series of holes (13a) is obtained on a ring (13) fixed in external position on the hub (6a) of the wheel (6), as shown in fig. 1.

The frame (1) of the stair lift of the invention (M) is provided on the lateral plates (1 a) with two bosses (14), one on the right and one on the left side, exactly in the point where the head (10b) of the pin (10) is positioned when the handles (3) are locked in idle position, that is to say when the stair lift (M) rests on the ground with the pair of wheels (6) that must be free to rotate (see fig. 4).

When the handles (3) are in idle position, the head (10b) of both pins (10) interferes with the boss (14) that forces the pin (10) to move backwards inside the sleeve (9) that houses and guides it, overcoming the expulsion antagonist force (11).

In such a position the peg (12a) is not inserted in any of the holes (13a) and therefore the wheels (6) rotate freely.

Vice versa, as soon as the handles (3) start rotating, the head (10b) of the pin (10) loses interference with the boss (14), with consequent instantaneous expulsion of the pin (10) from the sleeve (9) by the spring (11) in direction (F1).

Further to said expulsion, the plate (12) joined to the pin (10) is moved close to the ring (13) with simultaneous insertion of the peg (12a) in one of the holes (13a).

So both wheels (6) are locked and prevented from rotating until the handles (3) finish the 360° rotation and return to idle position, causing new interference between the boss (14) and the head (10b) of the pin (10).

In view of the above, it can be noted that the main components of said wheel-locking device (BR) are the boss (14), the pin (10) with relevant spring (11), the plate (12) with relevant peg (12a), and the series of holes (13a).

The stair lift (M) is also provided with an automatic emergency brake (F).

With reference to fig. 10, when the stair lift (M) is positioned on a step and the handle (3) is in idle position, the stair lift (M) may fall because the wheels (6) are free to rotate.

Said emergency brake (F) is used to lock the wheel (6) when the stair lift (M) gets too close to the edge of the step, with consequent risk of accidentally falling forwards.

For safety reasons, according to a preferred embodiment of the invention, the stair lift (M) is provided with said automatic emergency brake (F), which is designed to lock the wheels when they are about to pass over the edge.

Said brake (F) is of block type, meaning that it is composed of an ordinary block (15) supported by a bracket provided with a special joint.

The brake (F) is composed of a connecting rod (16) that supports said block internally (15) and a small wheel (17) in lower position that idles freely.

The connecting rod (16) ends with an upper fork (16a) for pivoting to a bracket (18) with a seat (18a) where the external ending section (9a) of the sleeve (9) is inserted and fixed, protruding for a short section outside the hub (6a) of the wheel (6).

The connecting rod (16) is subject to the force of a return spring (30) that tends to press it downwards, so that the block (15) interferes against the internal border of the rim (6b) of the wheel (6), which is suitably provided with a track (15a) where the block (15) adheres when the connecting rod (16) is in lowered work position.

The brake (F) is dimensioned in such a way that when the small wheel (17) loses contact with the sliding plane of the wheel (6), as shown in figs. 5, 6, 7 and 10, the connecting rod (16) is in lowered position and the block (15) is pressed against said track (15a).

Vice versa, when the wheel (6) rests on the ground, the small wheel (17) is in raised position and the connecting rod (16) is in raised position, so that the interference between the block (15) and the track (15a) of the wheel (6) ends, as shown in figs. 4 and 8.

The stair lift of the invention has been provided with suitable mechanisms to guarantee that both the wheel (6) and the small wheel (17) maintain the same position with respect to the horizontal plane of the floor and steps during the entire 360° rotation of the handle (3).

Said mechanisms are situated on both sides of the stair lift (M) and comprise a first fixed pinion (19) fixed on the frame (1) and a second pinion (20) directly fixed on the sleeve (9).

Said pinions (19 and 20) are connected by a drive chain (21) so that when the handle (3) starts rotation driven by the drive shaft (2), the chain (21) actuates the pinion (20) and the bracket (18) fixed to the sleeve (9), so that a 360° complete rotation of the handle (3) around its axis corresponds to a complete rotation of the brake (F) with respect to the axis of rotation of the wheel (6) and in reverse direction to the rotation of the handle (3).

During the rotation of the handle (3) the wheel (6) is locked and has no relative motion with respect to the handle (3), whereas the sleeve (9) idles inside the hub (6a).

Said brake (F) is very useful during the descending travel of the stair lift (M) since the operator can get close to the edge of the step without risk of passing over it, because as soon as the small wheel (17) passes over it, the return spring pushes it downwards, so that the block (15) engages with the track (15a) locking the wheel (6), as shown in fig. 10.

Now the stair lift (M) can no longer move, without any risk of accidentally falling forwards.

The step can be climbed down by actuating the motor in the rotation direction that corresponds to a forward rotation of the handles (3).

Evidently, the stair lift (M) is provided with an ordinary control keyboard, which comprises at least one button to actuate the motor used to rotate the shaft (2), which stops automatically when the handles (3) have completed 360° rotation starting from idle position, that is to say when the stair lift (M) rests on the ground with the pair of wheels (6).

## Claims

1. A stair lift with wheels supported by rotating handles, of the type composed of a frame (1) composed of a lateral pair of plates (1a) with vertically elongated shape, defining an intermediate space that houses a motor that drives into rotation a drive shaft (2) with horizontal axis that protrudes from the plates (1a) with the end sections (2a), on which two identical handles (3) are specularly mounted and fixed, one on the right and one on the left side, each of them supporting at the free end (3a) an outward-facing pin (P) on which one of the two identical lateral wheels (6) that allow for moving the stair lift idles; stair lift (M) **characterised in that** for every start-up of the motor the shaft (2) drives the pair of handles (3) in 360° complete rotation, after which the handles (3) always return to their original idle position, which coincides with the position in which the stair lift (M) rests on the ground by means of said wheels (6).

2. The stair lift as claimed in the preceding claim, **characterised in that** it is provided with a wheel-locking device (BR) to lock the wheels (6) from the beginning to the end of the 360° rotation of the handles (3).

3. The stair lift as claimed in the preceding claim, **characterised in that** each handle (3) is provided at the free end (3a) with a through hole (3b) in which a hollow pin (P) in inserted, on which the wheel (6) idles with the interposition of a bearing (7), with hub (6a) provided with an annular series of holes (13a), each of them receiving a peg (12a) that protrudes from a plate (12) fixed at the end (10a) of a lock pin (10) inserted in the pin (P) and subject to the axial thrust of a spring (11) that pushes it constantly against the lateral plate (1 a), which is provided with a boss (14) exactly on the point where the head (10b) of the pin (10) is positioned when the handles (3) are in idle position, that is to say when the stair lift (M) rests on the ground with the pair of wheels (6).

4. The stair lift as claimed in the preceding claim, **characterised in that** said lock pin (10) is axially inserted through a sleeve (9) that is inserted through a bush (70), which is in turn inserted in the hole (3b) for a section (71) of its length, whereas the remaining section (72) is inserted in a coupling (73) inserted with free rotation in the bearing (7) contained in the hub (6a) of the wheel (6).

5. The stair lift as claimed in the preceding claim, **characterised in that** said series of holes (13a) is obtained on a ring (13) fixed in external position on the hub (6a) of the wheel (6).

6. The stair lift as claimed in one or more of the preceding claims, **characterised in that** it is provided on both sides with a first fixed pinion (19) fixed on the frame (1) and a second pinion (20) directly fixed on the sleeve (9), said pinions (19 and 20) being connected by a drive chain (21) so that when the handle (3) starts rotation driven by the drive shaft (2), the chain (21) actuates the pinion (20) and the bracket (18) fixed to the sleeve (9) that idles in the hub (6a).

7. The stair lift as claimed in one or more of the preceding claims, **characterised in that** it is provided with a brake (F) with block, which comprises a connecting rod (16) that internally supports the block (15) and a small wheel (17) in lower position that idles freely, wherein said connecting rod (16) ends with an upper fork (16a) for pivoting to said bracket (18) with seat (18a) where the external ending section (9a) of the sleeve (9) is inserted and fixed, protruding for a short section outside the hub (6a) of the wheel (6); it being provided that the connecting rod (16) is subject to the thrust of a return spring (30) that tends to press it downwards so that the block (15) interferes against the internal border of the rim (6b) of the wheel (6), which is provided with a track (15a) where the block (15) adheres when the connecting rod (16) is in lowered work position.
